# EUROPÄISCHE PATENTANMELDUNG

(11) **EP 4 741 958 A1**
(43) Veröffentlichungstag der Anmeldung: **13.05.2026**
(21) Anmeldenummer: 24212260.4
(22) Anmeldetag: 12.11.2024
(51) Int. Cl.: G05B 19/18

(54) **VERFAHREN ZUR STEUERUNG EINES SCHWEISSGERÄTS SOWIE STEUEREINRICHTUNGEN DAFÜR**

(71) Anmelder: EWM GmbH, 56271 Mündersbach (DE)
(72) Erfinder: Bajohr, Nils, 57629 Atzelgift (DE)
(74) Vertreter: Cohausz & Florack

(57) **Zusammenfassung**

Die Erfindung betrifft ein Verfahren (210, 510, 610) zur übergeordneten Steuerung eines Schweißgeräts (120a-b), bei dem eine Steueranweisung (300) an eine Schweißgerät-Steuereinrichtung (130) eines Schweißgeräts (120a-b) gesendet wird, wobei die Steueranweisung (300) ein oder mehrere Steuerbefehle umfasst, die dazu vorgesehen sind, nach Erhalt eines Ausführungsbefehls ausgeführt zu werden, und bei dem, nach dem Senden der Steueranweisung (300), der Ausführungsbefehl an die Schweißgerät-Steuereinrichtung (130) des Schweißgeräts (120a-b) gesendet wird. Die Erfindung betrifft weitere ein Verfahren (230, 530, 630) zur Steuerung eines Schweißgeräts (120a-b), bei dem eine Steueranweisung (300) empfangen wird, wobei die Steueranweisung (300) ein oder mehrere Steuerbefehle umfasst, die dazu vorgesehen sind, nach Erhalt eines Ausführungsbefehls ausgeführt zu werden, bei dem, nach Empfang der Steueranweisung (300), der Ausführungsbefehl empfangen wird und bei dem, als Reaktion auf das Empfangen des Ausführungsbefehls, die Ausführung der Steueranweisung (300) bewirkt wird. Weiter betrifft die Erfindung eine Master-Steuereinrichtung (110), eine Schweißgerät-Steuereinrichtung (130) sowie ein System (100).

## Beschreibung

Die vorliegende Erfindung betrifft ein Verfahren zur übergeordneten Steuerung eines Schweißgeräts sowie zur Steuerung eines Schweißgeräts. Die vorliegende Erfindung betrifft weiter eine Master-Steuereinrichtung für die übergeordnete Steuerung ein oder mehrerer Schweißgeräte sowie eine Schweißgerät-Steuereinrichtung zur Steuerung eines Schweißgeräts. Die vorliegende Erfindung betrifft weiter ein System mit einer solchen Master-Steuereinrichtung und einem Schweißgerät mit einer solchen Schweißgerät-Steuereinrichtung.

Im Stand der Technik werden übergeordnete Steuerungen, beispielsweise speicherprogrammierbare Steuerungen (SPS), zur Steuerung von Schweißgeräten, wie Schweißautomaten bzw. -robotern, eingesetzt. Die übergeordneten Steuerungen geben zum Beispiel Sollwerte für Schweißparameter vor. Es besteht ein Bedürfnis, mit der übergeordneten Steuerung auch komplexe Ansteuerungen von Schweißgeräten zu ermöglichen, bei denen Sollwerte zum Beispiel zyklisch verändert werden. Dies erfolgt derzeit typischerweise durch die zyklische Übertragung von Sollwerten von der übergeordneten Steuerung zum Schweißgerät über eine digitale Kommunikationsverbindung, beispielsweise einen Feldbus.

Die zu dieser Kommunikation zwischen übergeordneter Steuerung und Schweißgerät eingesetzten digitalen Systeme bedingen jedoch Lauf- und Verarbeitungszeiten. Dies führt bei einer schnellen Folge von Sollwertänderungen beispielweise zu Treppeneffekten in den Werten des betreffenden Schweißparameters aufgrund von Verzögerung bei der Übermittlung der Sollwerte. Weiter kann es, bei mehreren gleichzeitig zu ändernden Sollwerten, zu relevanten Zeitversatzen in der Anpassung der einzelnen Sollwerte kommen. Dies kann zu unerwünschten Effekten in den angesteuerten Schweißprozessen führen.

Werden zudem Änderungen an der Software einer für die übergeordnete Steuerung verwendeten SPS vorgenommen, die zum Beispiel durch Vergrößerung des Programmcodes zu Erhöhungen der Laufzeiten für die Signalausgabe von Sollwerten führen, können sich die digitalen Verzögerungseffekte auf unvorhersehbare Weise verändern.

Diese Effekte führen zu Problemen in der Qualität von Schweißprozessen.

Vor diesem Hintergrund liegt der vorliegenden Erfindung die Aufgabe zu Grunde, Verfahren zur Steuerung eines Schweißgeräts sowie entsprechende Steuereinrichtungen und ein System vorzuschlagen, die die zuvor beschriebenen Probleme des Stands der Technik zumindest teilweise reduzieren oder beheben.

Die zuvor genannte Aufgabe wird erfindungsgemäß gelöst durch ein Verfahren zur übergeordneten Steuerung eines Schweißgeräts, insbesondere ausgeführt mit einer Master-Steuereinrichtung zur übergeordneten Steuerung ein oder mehrerer Schweißgeräte, bei dem eine Steueranweisung an eine Schweißgerät-Steuereinrichtung eines Schweißgeräts gesendet wird, wobei die Steueranweisung ein oder mehrere Steuerbefehle umfasst, die dazu vorgesehen sind, nach Erhalt eines Ausführungsbefehls ausgeführt zu werden, und bei dem, nach dem Senden der Steueranweisung, der Ausführungsbefehl an die Schweißgerät-Steuereinrichtung des Schweißgeräts gesendet wird.

Auf diese Weise können Steueranweisungen, beispielsweise auch komplexe Steueranweisungen mit mehreren Steuerbefehlen, zunächst vorab an eine Schweißgerät-Steuereinrichtung eines Schweißgeräts übertragen werden. Da die Steueranweisung nicht zur sofortigen Ausführung vorgesehen ist, fallen Verzögerungen bei der Übermittlung der Steueranweisung nicht ins Gewicht. Um die Ausführung der Steueranweisung zu bewirken, reicht dann die Übertragung eines Ausführungsbefehls an die Schweißgerät-Steuereinrichtung. Da die Steuerbefehle bereits vorab mit der Steueranweisung übertragen wurden, kann es sich bei dem Ausführungsbefehl um einen sehr einfachen Befehl handeln, dessen Verarbeitung und/oder Übertragung zu einer geringeren Latenz und/oder zu einer besser vorhersagbaren Latenz führt als die Übertragung der Steueranweisung. Auf diese Weise kann die Ausführung eine ggf. komplexen Steueranweisung mit geringerer und/oder vorhersagbareren Latenz bewirkt werden.

Das Verfahren dient zur übergeordneten Steuerung eines Schweißgeräts. Bei dem Schweißgerät kann es sich insbesondere um ein Lichtbogenschweißgerät mit abschmelzender Elektrode, insbesondere zum Metallschutzgasschweißen (MSG-Schweißen), oder mit nicht-abschmelzender Elektrode, insbesondere zum Wolframinertgasschweißen (WIG-Schweißen), handeln. Das Schweißgerät kann insbesondere als Teil einer automatisierten Schweißvorrichtung ausgebildet sein, beispielsweise eines Schweißautomaten oder eines Schweißroboters. Die Schweißvorrichtung kann insbesondere das Schweißgerät sowie eine Bewegungseinrichtung, wie zum Beispiel einen Roboterarm, zum Bewegen eines Schweißbrenners des Schweißgeräts umfassen.

Das Verfahren wird vorzugsweise ausgeführt mit einer Master-Steuereinrichtung zur übergeordneten Steuerung ein oder mehrerer Schweißgeräte. Bei der Master-Steuereinrichtung kann es sich beispielsweise um eine speicherprogrammierbare Steuerung (SPS) handeln. Weiterhin kann es sich bei der Master-Steuereinrichtung auch um einen Computer handeln, auf dem eine Steuersoftware für Schweißgeräte läuft.

Bei dem Verfahren wird eine Steueranweisung an eine Schweißgerät-Steuereinrichtung eines Schweißgeräts gesendet. Die Steueranweisung kann über eine drahtgebundene oder drahtlose Kommunikationsverbindung gesandt werden. Vorzugsweise wird die Steueranweisung über eine serielle Kommunikationsverbindung gesendet. Eine solche serielle Kommunikationsverbindung erlaubt die einfache Übermittlung komplexer Steueranweisungen.

Die Steueranweisung umfasst ein oder mehrere Steuerbefehle. Ein Steuerbefehl kann beispielsweise eine Sollwertvorgabe für einen Parameter, insbesondere Schweißparameter, des Schweißgeräts sein oder umfassen. Vorzugsweise umfasst die Steueranweisung mehrere Steuerbefehle, die zum Beispiel Sollwertvorgaben für verschiedene Schweißparameter oder eine Folge von zeitlich aufeinander folgenden Sollwertvorgaben für einen Schweißparameter umfassen können.

Die Sollwertvorgaben können bei Ausführung der Steueranweisung die Sollwerte einer auf der Schweißgerät-Steuerung laufenden Regelung für einen entsprechenden Schweißparameter setzen.

Die Steueranweisung kann beispielsweise ein oder mehrere Sollwertvorgaben für ein oder mehrere der folgenden Schweißparameter umfassen: Schweißstrom, Schweißspannung, Drahtvorschub, Vorschub eines Zusatzdrahtes.

Die Steueranweisung enthält vorzugsweise einen Instruktionssatz, der die zeitliche Abbildung und den Verlauf eines Signals beschreibt. Insbesondere kann die Steueranweisung Steuerbefehle zur Definition von Impulsfolgen für die Sollwertvorgaben enthalten.

Die Steueranweisung kann auch einen Steuerbefehl enthalten, der die Schweißgerät-Steuereinrichtung anweist, eine auf dem Schweißgerät laufende Steuerung oder Regelung, insbesondere entsprechend einer vorgegeben Signalfolge, zu unterbrechen, und vorzugsweise ein oder mehrere neue Sollwerte, beispielsweise einen neuen Signalverlauf, für die Steuerung oder Regelung vorgibt. Auf diese Weise kann die Master-Steuereinrichtung insbesondere abhängig von einem Momentanzustand, beispielsweise einem erhaltenen Ist-Wert, die Schweißgerät-Steuereinrichtung zu einem neuen Signalverlauf anweisen, beispielsweise indem eine aktuell gesteuerte Sollwertrampe, zum Beispiel für den Schweißstrom, zu einem neuen Endwert hin verändert wird.

Die ein oder mehreren Steuerbefehle sind dazu vorgesehen, nach Erhalt eines Ausführungsbefehls ausgeführt zu werden. Die Steuerbefehle der Steueranweisung sollen demnach nicht sofort bei Erhalt ausgeführt werden, sondern erst nach Erhalt eines gesonderten Ausführungsbefehls. Dies ermöglicht es, die Übertragung der einzelnen Steuerbefehle zeitlich von der Ausführung der Steuerbefehle zu trennen, so dass die Steuerbefehle nach Erhalt des Ausführungsbefehls ohne weiteres abgearbeitet werden können, ohne von Latenzen bei der Datenübertragung abzuhängen.

Darüber hinaus ermöglicht die gesonderte Auslösung der Steueranweisung durch den Ausführungsbefehl eine Synchronisierung der Ausführung der Steueranweisung mit anderen Prozessen, beispielsweise mit Bewegungen des Schweißgeräts. Werden zum Beispiel die Bewegungen einer Bewegungseinrichtung einer Schweißvorrichtung, beispielsweise die Bewegungen des Roboterarms eines Schweißroboters, über die Master-Steuereinrichtung gesteuert, so kann ein Schweißprozess zu der Bewegung synchronisiert werden, indem der Ausführungsbefehl abhängig von der Bewegungssteuerung gesendet wird, insbesondere der Zeitpunkt des Sendens des Ausführungsbefehls abhängig von der Bewegungssteuerung erfolgt.

Der Ausführungsbefehl kann der Steueranweisung insbesondere zugeordnet sein. Auf diese Weise kann die Schweißgerät-Steuereinrichtung einen empfangenen Ausführungsbefehl dem Steuerbefehl zuordnen. Die Zuordnung kann beispielsweise bedeuten, dass es sich bei dem Ausführungsbefehl einfach um den nächsten auf die Steueranweisung folgenden Ausführungsbefehl handelt. Weiterhin ist es denkbar, dass der Ausführungsbefehl einen Kenner umfasst, der eine Zuordnung zu der Steueranweisung ermöglicht. Beispielsweise können die Steueranweisung und der Ausführungsbefehl entsprechende Kenner zur gegenseitigen Zuordnung umfassen. Weiter ist es denkbar, dass der Ausführungsbefehl über einen der Steueranweisung zugeordneten Kommunikationskanal gesendet wird. Stehen beispielsweise mehrere Kommunikationskanäle für das Senden bzw. Empfangen eines Ausführungsbefehls zur Verfügung, so kann die Steueranweisung zum Beispiel einen Kanal-Kenner enthalten, der die Identifikation eines zugeordneten Kommunikationskanals ermöglicht, über den der Ausführungsbefehls gesendet bzw. empfangen wird.

Die Steueranweisung kann einen Kontrollwert umfassen, der es der empfangenden Schweißstrom-Steuereinheit ermöglicht, den fehlerfreien Empfang der Steueranweisung zu überprüfen. Bei dem Kontrollwert kann es sich beispielsweise um eine Prüfsumme oder um ein oder mehrere Paritätsbits handeln.

Bei dem Verfahren wird, nach dem Senden der Steueranweisung, der Ausführungsbefehl an die Schweißgerät-Steuereinrichtung des Schweißgeräts gesendet. Das Senden der Steueranweisung kann über dieselbe Kommunikationsverbindung oder über eine andere Kommunikationsverbindung erfolgen wie das Senden der Steueranweisung.

Der Ausführungsbefehl kann grundsätzlich zu einem beliebigen Zeitpunkt nach dem Senden der Steueranweisung gesendet werden. Auf diese Weise kann die Steueranweisung vorab übermittelt werden und anschließend zu einem gewünschten Zeitpunkt durch Senden des Ausführungsbefehls ausgeführt werden. Vorzugsweise erfolgt das Senden des Ausführungsbefehls frühestens nach Ablauf einer Mindestwartedauer seit dem Senden der Steueranweisung. Auf diese Weise kann sichergestellt werden, dass die vollständige und/oder fehlerfreie Übermittelung der Steueranweisung abgeschlossen ist, bevor der Ausführungsbefehl übermittelt wird.

Die zuvor genannte Aufgabe wird erfindungsgemäß weiterhin gelöst durch eine Master-Steuereinrichtung für die übergeordnete Steuerung ein oder mehrerer Schweißgeräte, aufweisend jeweilige Mittel zur Durchführung des zuvor beschriebenen Verfahrens für die übergeordnete Steuerung eines Schweißgeräts oder eine Ausführungsform davon. Insbesondere wird die zuvor genannte Aufgabe gelöst durch eine Master-Steuereinrichtung für die übergeordnete Steuerung ein oder mehrerer Schweißgeräte, aufweisend mindestens einen Mikroprozessor und mindestens einen Speicher mit Befehlen, deren Ausführung auf dem mindestens einen Mikroprozessor die Durchführung des zuvor beschrieben Verfahrens für die übergeordnete Steuerung eines Schweißgeräts oder einer Ausführungsform davon bewirkt.

Die zuvor genannte Aufgabe wird erfindungsgemäß weiter gelöst durch ein Verfahren zur Steuerung eines Schweißgeräts, insbesondere ausgeführt mit einer Schweißgerät-Steuereinrichtung eines Schweißgeräts, bei dem eine Steueranweisung empfangen wird, wobei die Steueranweisung ein oder mehrere Steuerbefehle umfasst, die dazu vorgesehen sind, nach Erhalt eines Ausführungsbefehls, insbesondere eines der Steueranweisung zugeordneten Ausführungsbefehls, ausgeführt zu werden, bei dem, nach Empfang der Steueranweisung, der Ausführungsbefehl empfangen wird, bei dem, als Reaktion auf das Empfangen des Ausführungsbefehls, die Ausführung der Steueranweisung bewirkt wird.

Das Verfahren dient zur Steuerung eines Schweißgeräts. Bei dem Schweißgerät kann es sich insbesondere um ein Lichtbogenschweißgerät mit abschmelzender Elektrode, insbesondere zum Metallschutzgasschweißen (MSG-Schweißen), oder mit nicht-abschmelzender Elektrode, insbesondere zum Wolframinertgasschweißen (WIG-Schweißen), handeln. Das Schweißgerät kann insbesondere als Teil einer automatisierten Schweißvorrichtung ausgebildet sein, beispielsweise eines Schweißautomaten oder eines Schweißroboters. Die Schweißvorrichtung kann insbesondere das Schweißgerät sowie eine Bewegungseinrichtung, wie zum Beispiel einen Roboterarm, zum Bewegen eines Schweißbrenners des Schweißgeräts umfassen.

Das Verfahren wird vorzugsweise ausgeführt mit einer Schweißgerät-Steuereinrichtung eines Schweißgeräts. Bei der Schweißgerät-Steuereinrichtung kann es sich insbesondere um die Steuereinrichtung einer Schweißstromquelle des Schweißgeräts handeln. Die Schweißgerät-Steuereinrichtung ist insbesondere zur Steuerung des Schweißgeräts eingerichtet, insbesondere dazu, einen Schweißprozess zu steuern und/oder zu regeln.

Bei dem Verfahren wird eine Steueranweisung empfangen. Die Steueranweisung kann insbesondere von einer Master-Steuereinrichtung empfangen werden, insbesondere über eine Kommunikationsverbindung zwischen der Schweißgerät-Steuereinrichtung und einer Master-Steuereinrichtung.

Die Steueranweisung umfasst ein oder mehrere Steuerbefehle. Ein Steuerbefehl kann beispielsweise eine Sollwertvorgabe für einen Parameter, insbesondere Schweißparameter, des Schweißgeräts sein oder umfassen. Vorzugsweise umfasst die Steueranweisung mehrere Steuerbefehle, die zum Beispiel Sollwertvorgaben für verschiedene Schweißparameter oder eine Folge von zeitlich aufeinander folgenden Sollwertvorgaben für einen Schweißparameter umfassen können.

Die ein oder mehreren Steuerbefehle sind dazu vorgesehen, nach Erhalt eines Ausführungsbefehls, insbesondere eines der Steueranweisung zugeordneten Ausführungsbefehls, ausgeführt zu werden. Die Steuerbefehle der Steueranweisung sollen demnach nicht sofort bei Erhalt ausgeführt werden, sondern erst nach Erhalt eines gesonderten Ausführungsbefehls. Dies ermöglicht es, die Übertragung der einzelnen Steuerbefehle zeitlich von der Ausführung der Steuerbefehle zu trennen, so dass die Steuerbefehle nach Erhalt des Ausführungsbefehls ohne weiteres abgearbeitet werden können, ohne von Latenzen bei der Datenübertragung abzuhängen.

Die Steueranweisung kann einen Kontrollwert umfassen, der es der empfangenen Schweißstrom-Steuereinheit ermöglicht, den fehlerfreien Empfang der Steueranweisung zu überprüfen. Bei dem Kontrollwert kann es sich beispielsweise um eine Prüfsumme oder um ein oder mehrere Paritätsbits handeln.

Bei dem Verfahren wird, nach Empfang der Steueranweisung, der Ausführungsbefehl empfangen. Das Empfangen der Steueranweisung kann über dieselbe Kommunikationsverbindung oder über eine andere Kommunikationsverbindung erfolgen wie das Empfangen der Steueranweisung.

Der Ausführungsbefehl kann grundsätzlich zu einem beliebigen Zeitpunkt nach dem Empfangen der Steueranweisung empfangen werden. Vorzugsweise vergeht zwischen dem Empfangen der Steueranweisung und dem Empfangen des Ausführungsbefehls mindestens eine vorgegebene Mindestdauer, so dass die Schweißgerät-Steuereinrichtung die Steueranweisung vollständig empfangen und ggf. dekodieren kann.

Bei dem Verfahren wird als Reaktion auf das Empfangen des Ausführungsbefehls die Ausführung der Steueranweisung bewirkt. Vorzugsweise erfolgt die Ausführung der Steueranweisung unmittelbar nach Empfangen des Ausführungsbefehls. Auf diese Weise kann durch den Ausführungsbefehl der Beginn zur Ausführung der Steueranweisung festgelegt werden. Die Ausführung der Steueranweisung kann insbesondere umfassen, dass in der Steueranweisung enthaltenen Sollwertvorgaben als Sollwerte für ein oder mehrere auf der Schweißgerät-Steuerung laufende Regelkreise für ein oder mehrere Schweißparameter gesetzt werden.

Die zuvor genannte Aufgabe wird erfindungsgemäß weiterhin gelöst durch eine Schweißgerät-Steuereinrichtung eines Schweißgeräts, aufweisend jeweilige Mittel zur Durchführung des zuvor beschrieben Verfahrens zur Steuerung eines Schweißgeräts oder einer Ausführungsform davon. Insbesondere wird die zuvor genannte Aufgabe gelöst durch eine Schweißgerät-Steuereinrichtung eines Schweißgeräts aufweisend mindestens einen Mikroprozessor und mindestens einen Speicher mit Befehlen, deren Ausführung auf dem mindestens einen Mikroprozessor die Durchführung des zuvor beschrieben Verfahrens zur Steuerung eines Schweißgeräts oder einer Ausführungsform davon bewirkt.

Die zuvor genannten Aufgabe wird erfindungsgemäß weiterhin gelöst durch ein Verfahren zur übergeordneten Steuerung eines Schweißgeräts, ausgeführt mit einer Master-Steuereinrichtung zur übergeordneten Steuerung ein oder mehrerer Schweißgeräte sowie einer Schweißgerät-Steuereinrichtung eines Schweißgeräts, bei dem die Master-Steuereinrichtung eine Steueranweisung an die Schweißgerät-Steuereinrichtung sendet, wobei die Steueranweisung ein oder mehrere Steuerbefehle umfasst, die dazu vorgesehen sind, nach Erhalt eines Ausführungsbefehls, insbesondere eines der Steueranweisung zugeordneten Ausführungsbefehls, ausgeführt zu werden, bei dem die Schweißgerät-Steuereinrichtung die Steueranweisung empfängt, bei dem die Master-Steuereinrichtung, nach dem Senden der Steueranweisung, den Ausführungsbefehl an die Schweißgerät-Steuereinrichtung sendet, und bei dem die Schweißgerät-Steuereinrichtung den Ausführungsbefehl empfängt und in Reaktion darauf die Ausführung der Steueranweisung bewirkt.

Die zuvor genannte Aufgabe wird erfindungsgemäß weiterhin gelöst durch ein System mit der zuvor beschriebenen Master-Steuereinrichtung oder einer Ausführungsform davon und mit ein oder mehreren Schweißgeräten, wobei mindestens eines der ein oder mehreren Schweißgeräte die zuvor beschriebene Schweißgerät-Steuereinrichtung oder eine Ausführungsform davon aufweist.

Im Folgenden werden verschiedene Ausführungsformen des Verfahrens zur übergeordneten Steuerung ein oder mehrerer Schweißgeräte, der Verfahren zur Steuerung eines Schweißgeräts, der Master-Steuereinrichtung für die übergeordnete Steuerung eines oder mehrerer Schweißgeräte, der Schweißgerät-Steuereinrichtung und des Systems beschrieben, wobei die einzelnen Ausführungsformen jeweils unabhängig voneinander für das Verfahren zur übergeordneten Steuerung ein oder mehrerer Schweißgeräte, die Verfahren zur Steuerung eines Schweißgeräts, die Master-Steuereinrichtung für die übergeordnete Steuerung eines oder mehrerer Schweißgeräte, die Schweißgerät-Steuereinrichtung und das System gelten. Darüber hinaus können die einzelnen Ausführungsformen beliebig miteinander kombiniert werden.

Bei einer Ausführungsform, insbesondere des Verfahrens zur übergeordneten Steuerung eines Schweißgeräts, werden Ist-Werte eines Schweißprozesses erhalten und die Steueranweisung wird abhängig von den erhaltenen Ist-Werten erzeugt und/oder der Ausführungsbefehl wird abhängig von den erhaltenen Ist-Werten gesendet. Auf diese Weise ist durch die übergeordnete Steuerung eine Regelung, insbesondere übergeordnete Regelung, eines Schweißprozesses möglich.

Beispielsweise kann auf diese Weise eine hierarchische Regelung oder Kaskadenregelung realisiert werden, bei der ein innerer Regelkreis, insbesondere mit kurzen Regelzeiten im µs-Bereich, auf dem Schweißgerät realisiert wird, beispielsweise zur Regelung schnell ablaufender Prozesse, und eine übergreifende Regelung, insbesondere mit gegenüber dem inneren Regelkreis längeren Regelzeiten, über die Master-Steuereinrichtung realisiert wird, beispielsweise zur Regelung übergreifender Prozessparameter.

Die Ist-Werte können beispielsweise von der Schweißgerät-Steuerung erhalten werden. Dadurch können im Schweißgerät erfasste Ist-Werte von Schweißparametern für die Steuerung verwendet werden. Bei einer entsprechenden Ausführungsform, insbesondere des Verfahrens zur Steuerung eines Schweißgeräts, werden entsprechend ein oder mehrere erfasste Ist-Werte gesendet, insbesondere an die Master-Steuereinrichtung.

Zusätzlich oder alternativ können die Ist-Wert auch von gesonderten Messeinrichtungen, beispielsweise Spannungs- und/oder Strommesseinrichtungen, erhalten werden, die beispielsweise direkt mit der Master-Steuereinrichtung verbunden sein können. Auf diese Weise können Latenzen zur Übermittlung der Ist-Werte reduziert werden, so dass insbesondere zeitkritische Prozesse besser geregelt werden können.

Bei den Ist-Werten kann es sich insbesondere um Ist-Werte eines oder mehrerer Schweißparameter, beispielsweise des Schweißstroms, der Schweißspannung oder der Drahtvorschubgeschwindigkeit, handeln.

Bei einer Variante der zuvor beschriebenen Ausführungsform wird die Steueranweisung abhängig von den erhalten Ist-Werten erzeugt. Insbesondere können für die Steueranweisung ein oder mehrere Steuerbefehle erzeugt werden, die eine Regelung der erhalten Ist-Werte auf vorgegebene Soll-Werte bewirken. Die Steuerbefehle können beispielsweise Soll-Werte für Stellgrößen der Regelstrecke umfassen.

Zusätzlich oder alternativ wird bei einer weiteren Variante der zuvor beschriebenen Ausführungsform der Ausführungsbefehl abhängig von den erhaltenen Ist-Werten gesendet. Insbesondere kann der Zeitpunkt des Sendens des Ausführungsbefehls abhängig von den erhaltenen Ist-Werten gewählt werden. Auf diese Weise kann zum Beispiel eine zuvor übermittelte Steueranweisung abhängig von den aktuellen Ist-Werten ausgeführt werden, wodurch ebenfalls eine Regelung des betreffenden Schweißgeräts möglich ist.

Bei einer Ausführungsform, insbesondere des Verfahrens zur übergeordneten Steuerung eines Schweißgeräts, wird, nach dem Senden der Steueranweisung, eine Bestätigung über den Erhalt der Steueranweisung empfangen und das Senden des Ausführungsbefehls erfolgt abhängig vom Erhalt der Bestätigung. Bei einer entsprechenden Ausführungsform, insbesondere des Verfahrens zur Steuerung eines Schweißgeräts, wird, nach Empfang der Steueranweisung, eine Bestätigung über den Erhalt der Steueranweisung gesendet, insbesondere an die Master-Steuereinrichtung. Durch diese Ausführungsformen kann sichergestellt werden, dass die Schweißgerät-Steuereinrichtung die Steueranweisung empfangen hat, bevor mit dem Ausführungsbefehl der Befehl zu deren Ausführung versandt wird.

Die Bestätigung über den Erhalt der Steueranweisung kann eine Information über ein Prüfergebnis einer Prüfung des fehlerfreien und/oder vollständigen Erhalts der Steueranweisung beinhalten. Eine solche Prüfung kann die Schweißgerät-Steuereinrichtung beispielsweise anhand eines in der Steueranweisung enthaltenen Kontrollwerts, wie Prüfsumme oder Paritätsbit, durchführen.

Auf diese Weise kann nicht nur der Erhalt, sondern auch der fehlerfreie und/oder vollständige Erhalt der Steueranweisung durch die Schweißgerät-Steuereinrichtung sichergestellt werden, bevor der Ausführungsbefehl versendet wird. Zeigt die Information über das Prüfergebnis, dass die Steueranweisung nicht fehlerfrei und/oder nicht vollständig erhalten wurde, so kann, insbesondere durch die Master-Steuereinrichtung, ein erneutes Senden der Steueranweisung bewirkt werden. Entsprechend wird die Steueranweisung vorzugsweise erneut an die Schweißgerät-Steuereinrichtung gesendet, wenn eine Information über einen fehlerhaften und/oder unvollständigen Empfang der Steueranweisung erhalten wird, insbesondere die Master-Steuereinrichtung eine solche Information von der Schweißgerät-Steuereinrichtung empfängt. Zusätzlich oder alternativ wird die Steueranweisung zudem vorzugsweise erneut an die Schweißgerät-Steuereinrichtung gesendet, wenn innerhalb einer vorgegebenen Zeitdauer nach dem Senden der Steueranweisung keine Bestätigung über den Erhalt der Steueranweisung empfangen wurde.

Bei einer Ausführungsform, insbesondere des Verfahrens zur übergeordneten Steuerung eines Schweißgeräts oder des Verfahrens zur Steuerung eines Schweißgeräts, umfasst die Steueranweisung ein oder mehrere Steuerbefehle zur zeitabhängigen Änderung mindestens eines Schweißparameters. Beispielsweise kann die Steueranweisung einen Steuerbefehl mit zwei oder mehr nacheinander, insbesondere mit vorgegebenem zeitlichen Abstand nacheinander, einzustellenden Sollwerten für einen Parameter umfassen. Weiterhin ist es denkbar, dass der Steuerbefehl einen Sollwert für einen Schweißparameter und eine Änderungsrate für den Sollwert des Schweißparameters umfasst, wobei die Änderungsrate vorzugsweise eine Änderung des Sollwerts pro Zeiteinheit vorgibt. Auf diese Weise kann die Steueranweisung der Schweißstrom-Steuereinrichtung nicht nur einzelne Sollwerte, sondern zum Beispiel Verläufe von Sollwerten vorgeben, beispielsweise eine Rampe für einen Parameter mit vorgegebener Steigung. Damit entfällt die Notwendigkeit, die einzelnen Sollwerte nacheinander an die Schweißgerät-Steuereinrichtung zu übertragen, so dass Treppen-Effekte und/oder Verzögerungen durch Latenzen während des Verlaufs des Sollwerts vermieden werden.

Bei einer Ausführungsform, insbesondere des Verfahrens zur übergeordneten Steuerung eines Schweißgeräts oder des Verfahrens zur Steuerung eines Schweißgeräts, ist aus der Steueranweisung ableitbar, dass die ein oder mehreren Steuerbefehle der Steueranweisung dazu vorgesehen sind, nach Erhalt eines Ausführungsbefehls ausgeführt zu werden. Zu diesem Zweck kann die Steueranweisung insbesondere einen Kenner umfassen, der anzeigt, dass die ein oder mehreren Steuerbefehle der Steueranweisung dazu vorgesehen sind, nach Erhalt eines Ausführungsbefehls ausgeführt zu werden. Alternativ kann auch aus der Abwesenheit eines bestimmten Kenners geschlossen werden, dass die ein oder mehreren Steuerbefehle der Steueranweisung dazu vorgesehen sind, nach Erhalt eines Ausführungsbefehls ausgeführt zu werden, beispielsweise wenn das Vorhandensein eines Kenners anzeigt, dass die ein oder mehreren Steuerbefehle der Steueranweisung nicht dazu vorgesehen sind, nach Erhalt eines Ausführungsbefehls ausgeführt zu werden, sondern beispielsweise dazu vorgesehen sind, unmittelbar ausgeführt zu werden.

Auf diese Weise kann die Schweißgerät-Steuereinrichtung unterscheiden, ob die Steueranweisung unmittelbar nach deren Empfang oder erst nach Empfang eines Ausführungsbefehls ausgeführt werden soll. Dadurch kann die übergeordnete Master-Steuereinrichtung flexibel sowohl unmittelbar auszuführende als auch nach einem gesonderten Ausführungsbefehl auszuführende Steueranweisungen an die Schweißgerät-Steuereinrichtung senden, wodurch sich diese flexibler steuern lässt. Insbesondere kann die Schweißgerät-Steuereinrichtung auf diese Weise auch nach dem Empfang einer bestimmten erst nach Erhalt eines Ausführungsbefehls auszuführenden Steueranweisung noch weitere unmittelbar ausführbare Steueranweisungen empfangen und ausführen, bevor der Ausführungsbefehl für die bestimmte Steueranweisung erhalten wird.

Bei dem Verfahren zur Steuerung eines Schweißgeräts kann insbesondere abhängig von der Steueranweisung, insbesondere abhängig von dem Kenner, entschieden werden, ob die Ausführung der erhaltenen Steueranweisung von dem Empfang eines Ausführungsbefehls, insbesondere eines der Steueranweisung zugeordneten Ausführungsbefehls, abhängig ist oder nicht.

Bei einer Ausführungsform, insbesondere des Verfahrens zur übergeordneten Steuerung eines Schweißgeräts, wird die Steueranweisung über eine erste Kommunikationsverbindung, insbesondere serielle Kommunikationsverbindung, gesendet und der Ausführungsbefehl wird über eine gesonderte weitere Kommunikationsverbindung gesendet. Bei einer entsprechenden Ausführungsform, insbesondere des Verfahrens zur Steuerung eines Schweißgeräts, wird die Steueranweisung über eine erste Kommunikationsverbindung, insbesondere serielle Kommunikationsverbindung, empfangen und der Ausführungsbefehl wird über eine gesonderte weitere Kommunikationsverbindung empfangen. Durch die Wahl verschiedener Kommunikationsverbindungen für die Steueranweisung und den Ausführungsbefehl können für das Senden bzw. Empfangen der Steueranweisung und des Ausführungsbefehls jeweils hierfür besonders geeignete Kommunikationsverbindungen gewählt werden.

Die Steueranweisung kann mehrere oder komplexe Steuerbefehle umfassen, so dass für die Übertragung der Steueranweisung vorzugsweise eine Kommunikationsverbindung gewählt wird, die für die Übertragung komplexerer Informationen geeignet ist, beispielsweise eine Kommunikationsverbindung über eine serielle Schnittstelle, mit der eine Nachricht als zeitliche Datenfolge übermitteln werden kann. Derartige Kommunikationsverbindungen können allerdings eine höhere und ggf. weniger vorhersehbare Latenz aufweisen. Dies ist bei den hier beschriebenen Verfahren aufgrund des gesonderten Ausführungsbefehls jedoch hinnehmbar. Entsprechend handelt es sich bei der ersten Kommunikationsverbindung vorzugsweise um eine serielle Kommunikationsverbindung, beispielsweise gemäß dem RS232-Standard, insbesondere für asynchrone Datenübertragung, beispielsweise UART (UART: Universal Asynchronous Receiver Transmitter). Als erste Kommunikationsverbindung kann insbesondere eine serielle Kommunikationsverbindung mit einem standardisierten Übertragungsprotokoll verwendet werden.

Demgegenüber ist es für die Übertragung des Ausführungsbefehls vorteilhaft, wenn diese mit geringer und/oder gut vorhersehbarer Latenz erfolgt, so dass der Ausführungsbefehl zu einem zeitnahen bzw. vorhersehbaren Zeitpunkt an der Schweißgerät-Steuereinrichtung empfangen werden kann. Dies ist vorliegend gut möglich, da der Ausführungsbefehl sehr einfach, im Extremfall beispielsweise lediglich ein einzelnes Bit bzw. Schaltsignal, sein kann, so dass einfache Latenz-arme Kommunikationsverbindungen, beispielsweise eine gesonderte Datenleitung für ein Schaltsignal, verwendet werden können. Entsprechend handelt es sich bei der gesonderten weitere Kommunikationsverbindung vorzugsweise um eine Kommunikationsverbindung über eine gesonderte Datenleitung, wobei als Ausführungsbefehl weiter bevorzugt lediglich ein binäres Signal (On/Off bzw. Hi/Lo) übertragen wird.

Weitere Merkmale und Vorteile des Verfahrens zur übergeordneten Steuerung eines Schweißgeräts, der Verfahren zur Steuerung eines Schweißgeräts, der Master-Steuereinrichtung, der Schweißgerät-Steuereinrichtung und des Systems ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel der Master-Steuereinrichtung, der Schweißgerät-Steuereinrichtung und des Systems,
- Fig. 2: ein Ausführungsbeispiel des Verfahrens zur übergeordneten Steuerung eines Schweißgeräts sowie des Verfahrens zur Steuerung eines Schweißgeräts,
- Fig. 3a-b: eine Steueranweisung (Fig. 3a) und ein Diagramm mit einem der Steueranweisung entsprechenden Schweißstromverlauf (Fig. 3b),
- Fig. 4: ein Schweißstromverlauf mit Treppeneffekten,
- Fig. 5: ein weiteres Ausführungsbeispiel des Verfahrens zur übergeordneten Steuerung eines Schweißgeräts sowie des Verfahrens zur Steuerung eines Schweißgeräts und
- Fig. 6: ein weiteres Ausführungsbeispiel des Verfahrens zur übergeordneten Steuerung eines Schweißgeräts sowie des Verfahrens zur Steuerung eines Schweißgeräts.

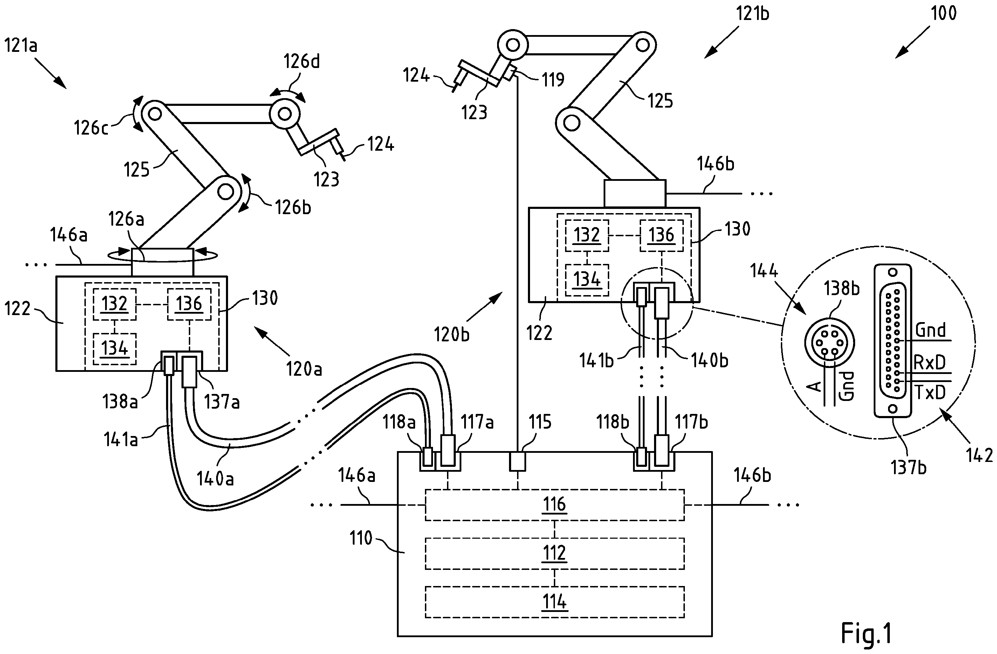

Fig. 1 zeigt ein Ausführungsbeispiel der Master-Steuereinrichtung, der Schweißgerät-Steuereinrichtung und des Systems.

Das System 100 umfasst die Master-Steuereinrichtung 110 und zwei Schweißgeräte 120a-b zum Lichtbogenschweißen. Die zwei Schweißgeräte 120a-b sind lediglich beispielhaft. Das System 100 kann stattdessen auch lediglich ein Schweißgerät oder mehr als zwei Schweißgeräte aufweisen. Die Schweißgeräte 120a-b sind vorliegend als Lichtbogenschweißgeräte ausgebildet und umfassen jeweils eine Schweißstromquelle 122 sowie einen Schweißbrenner 123, der von der Schweißstromquelle 122 versorgt wird. Die Schweißgeräte 120a-b können zum Beispiel wie in Fig. 1 dargestellt als WIG-Schweißgeräte mit nicht-abschmelzender Elektrode 124 oder alternativ auch als MSG-Schweißgeräte mit abschmelzender Elektrode ausgebildet sein.

Weiter sind die Schweißgeräte 120a-b in Fig. 1 als Teil einer jeweiligen automatisierten Schweißvorrichtung 121a-b in Form von Schweißrobotern ausgebildet. Die Schweißvorrichtung 121a-b umfassen jeweils das betreffende Schweißgerät 120a-b sowie eine jeweilige Bewegungseinrichtung 125 in Form eines Roboterarms mit ein oder mehreren Antriebsachsen 126a-d, an dem der Schweißbrenner 123 des jeweiligen Schweißgeräts 120a-b befestigt ist. Es sind aber auch andere automatisierte Schweißvorrichtungen als Schweißroboter denkbar, beispielsweise andere Schweißautomaten. Weiterhin kann es sich bei den Schweißgeräten 120a-b sogar um Handschweißgeräte handeln, wenn diese zumindest teilweise über eine übergeordnete Master-Steuereinrichtung 110 gesteuert werden sollen.

Die Schweißgeräte 120a-b weisen jeweils eine Schweißgerät-Steuereinrichtung 130 auf, die als funktionale Einheiten jeweils eine Steuereinheit 132 mit ein oder mehreren Mikroprozessoren, einen Speicher 134 und eine Kommunikationseinrichtung 136 umfasst. Im vorliegenden Beispiel ist die Schweißgerät-Steuereinrichtung 130 in der Schweißstromquelle 122 untergebracht.

Die Schweißgerät-Steuereinrichtung 130 ist jeweils zur Steuerung des jeweiligen Schweißgeräts 120a-b eingerichtet, insbesondere zur Steuerung der Komponenten der Schweißstromquelle 122 wie eines Inverters (nicht gezeigt) zur Bereitstellung des Schweißstroms. Zu diesem Zweck sind auf dem Speicher 134 Befehle gespeichert, deren Ausführung auf der Steuereinheit 132 die Steuerung des jeweiligen Schweißgeräts 120a-b bewirkt. Auf diese Weise kann insbesondere ein mit dem jeweiligen Schweißgerät 120a-b durchgeführter Schweißprozess gesteuert oder geregelt werden. Zur Regelung von Schweißprozessen sind im Schweißgerät 120a-b insbesondere interne Messsensoren, wie Spannungs- und Strommesssensoren vorgesehen, mit denen Ist-Werte des Schweißprozesses, insbesondere Schweißstrom und Schweißspannung, gemessen werden können.

Die Master-Steuereinrichtung 110 weist als funktionale Einheiten eine Steuereinheit 112 mit ein oder mehreren Mikroprozessoren, einen Speicher 114 und eine Kommunikationseinrichtung 116 auf.

Die Kommunikationseinrichtung 116 der Master-Steuereinrichtung 110 und die jeweilige Kommunikationseinrichtung 136 der Schweißgeräte 120a-b sind dazu eingerichtet, über ein oder mehrere Kommunikationsverbindungen Daten zwischen der Master-Steuereinrichtung 110 und dem jeweiligen Schweißgerät 120a-b auszutauschen.

Im vorliegenden Beispiel werden die Kommunikationsverbindungen über jeweilige Schnittstellen 137a-b, 138a-b der Schweißgeräte und jeweilige Schnittstellen 117a-b, 118a-b der Master-Steuereinrichtung 110 bewirkt, die durch jeweilige Datenkabel 140a-b, 141a-b miteinander verbunden sind. Im vorliegenden Beispiel handelt es sich bei den Schnittstellen 117a-b bzw. 137a-b um DB-25-Schnittstellen nach dem RS-232-Standard und bei den Schnittstellen 118a-b bzw. 138a-b um Rundstecker-Schnittstellen nach dem MIL-DTL-5015-Standard. Dies ist jedoch nur beispielhaft.

Die Kommunikationseinrichtungen 116, 136 sind vorliegend dazu eingerichtet, über die Schnittstellen 137a-b, 117a-b und 138a-b, 118a-b jeweils zwei verschiedene Kommunikationsverbindungen zwischen dem jeweiligen Schweißgerät 120a-b und der Master-Steuereinrichtung 110 zu betreiben. Wie in der Vergrößerung in Fig. 1 dargestellt, wird durch die standardisierte Pin-Belegung der DB-25-Schnittstellen nach dem RS-232-Standard eine serielle Kommunikationsverbindung 142, die insbesondere die Pins RxD (Leitung für eingehende Daten), TxD (Leitung für ausgehende Daten) und Gnd (Signalmasse) nutzt, etabliert. Weiter wird über zwei Pins A (Signal) und Gnd (Signalmasse) der Rundstecker-Schnittstelle 138 eine weitere Kommunikationsverbindung 144 zur Übertragung eines einfachen binären Signals (z.B. Spannung 5V gegenüber Signalmasse = 1, Spannung 0V gegenüber Signalmasse = 0) etabliert.

Die Master-Steuereinrichtung 110 weist im vorliegenden Beispiel weiter noch eine Schnittstelle 115 für einen externen Messsensor 119 auf.

Die Master-Steuereinrichtung 110 ist darüber hinaus dazu eingerichtet, die Antriebsachsen 126a-d der Roboterarme 125 zu steuern. Zu diesem Zweck sind die Roboterarme 125 über jeweilige Steuerkabel 146a-b mit der Master-Steuereinrichtung 110 verbunden. Die Master-Steuereinrichtung 110 stellt demnach eine Roboterarmsteuerung für beide Schweißvorrichtungen 121a-b dar. Alternativ ist es auch denkbar, dass jede der Schweißvorrichtungen 121a-b eine eigene Roboterarmsteuerung aufweist.

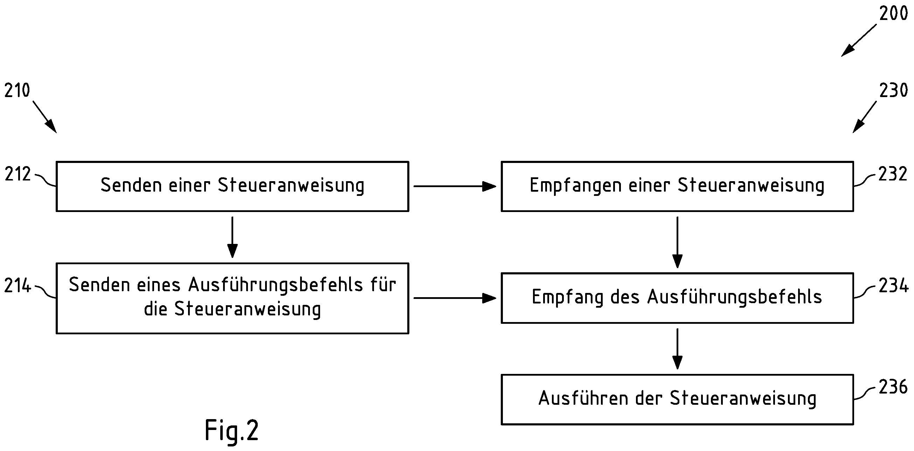

Mögliche Verfahren zur übergeordneten Steuerung der Schweißgeräte 120a-b durch die Master-Steuereinrichtung 110 bzw. Verfahren zur Steuerung der Schweißgeräts 120a-b durch die Schweißgerät-Steuereinrichtungen 130 werden im Folgenden anhand der Fig. 2 - 6 beschrieben. Insbesondere können der Speicher 114 bzw. 134 jeweils entsprechende Befehle enthalten, die eine Steuerung gemäß der im Folgenden beschriebenen Verfahren bewirkt.

Fig. 2 zeigt ein Ausführungsbeispiel des Verfahrens zur übergeordneten Steuerung eines Schweißgeräts sowie des Verfahrens zur Steuerung eines Schweißgeräts. Das Verfahren 210 zur übergeordneten Steuerung kann insbesondere mit der Master-Steuereinrichtung 110 aus Fig. 1 durchgeführt werden. Das Verfahren 230 zur Steuerung eines Schweißgeräts kann insbesondere mit der Schweißgerät-Steuereinrichtung 130 des Schweißgeräts 120a oder 120b aus Fig. 1 durchgeführt werden. Gemeinsam stellen die Verfahren 210 und 230 ein Verfahren 200 zur Steuerung eines Schweißgeräts dar, das insbesondere mit dem System 100 aus Fig. 1 durchgeführt werden kann.

In einem ersten Schritt 212 des Verfahrens 210 sendet die Master-Steuereinrichtung 110 über die serielle Kommunikationsverbindung 142 eine Steueranweisung 300 an die Schweißgerät-Steuereinrichtung 130 des Schweißgeräts 120a oder 120b. Diese Steueranweisung 300 wird von der Schweißgerät-Steuereinrichtung 130 des betreffenden Schweißgeräts 120a bzw. 120b im ersten Schritte 232 des Verfahrens 230 empfangen.

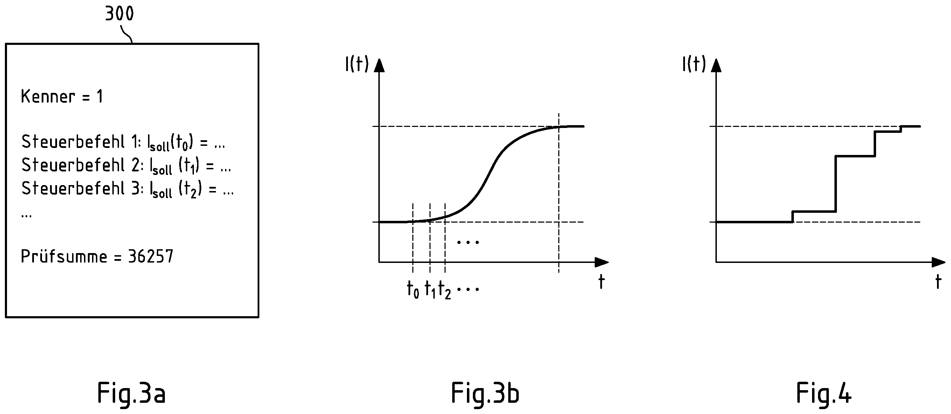

Fig. 3a illustriert ein Beispiel für eine solche Steueranweisung in schematischer Darstellung. Die Steueranweisung 300 umfasst mehrere Steuerbefehle ("Steuerbefehl 1", "Steuerbefehl 2", ...), wie zum Beispiel eine Folge von zeitlich aufeinander abgestimmten Soll-Werten für den Schweißstrom (Iₛₒₗₗ(t₀), Iₛₒₗₗ(t₁), ...), um während eines laufenden Schweißprozesses ein bestimmtes Stromprofil, beispielsweise eine Schweißstromflanke mit einer durch die Soll-Werte vorgegebenen Form, zu bewirken, wie sie exemplarisch in dem Diagramm in Fig. 3b gezeigt ist. Anstelle von einzelnen Stützstellen-Soll-Werten könnte die Steueranweisung auch Steuerbefehle mit einer parametrischen Beschreibung des Stromprofils enthalten.

Die serielle Kommunikationsverbindung 142 erlaubt die Übermittlung solch komplexer Steueranweisungen. Hierbei kommt es jedoch zu längeren, teils nicht vorhersehbaren Latenzen, da die Steueranweisung von der Kommunikationseinrichtung 116 zunächst in eine serielle Nachricht übersetzt (codiert) wird, diese dann seriell über das Datenkabel 140a bzw. 140b übertragen wird und die empfangene Nachricht anschließend von der Kommunikationseinrichtung 136 wieder in die Steueranweisung rückübersetzt (decodiert) wird.

Würde die Schweißgerät-Steuereinrichtung 130 die betreffenden Steuerbefehle einzeln erhalten und unmittelbar umsetzen, können diese Latenzen dazu führen, dass die Steuerbefehle teilweise verzögert bzw. mit unvorhersehbaren Verzögerungen erhalten werden, so dass es bei der Umsetzung der Steuerbefehle zum Beispiel zu Treppeneffekten kommen kann, wie sie exemplarisch im Diagramm in Fig. 4 dargestellt sind.

Um dies zu verhindern und eine möglichst genaue, insbesondere zeitlich genaue, Umsetzung der Steuerbefehle zu bewirken, werden die Steuerbefehle der Steueranweisung von der Schweißgerät-Steuereinrichtung 130 nicht unmittelbar umgesetzt. Vielmehr wartet Schweißgerät-Steuereinrichtung 130 zunächst den Erhalt eines gesonderten Ausführungsbefehls ab.

Damit die Schweißgerät-Steuereinrichtung 130 erkennen kann, dass die Steueranweisung 300 erst bei Erhalt des Ausführungsbefehls umgesetzt werden soll, kann die Master-Steuereinrichtung 110 in der Steueranweisung 300 einen entsprechenden Kenner setzen, anhand dessen die Schweißgerät-Steuereinrichtung 130 bestimmen kann, ob mit der Ausführung der Steueranweisung auf den Erhalt eines Ausführungsbefehls zu warten ist (z.B. "Kenner = 1") oder nicht (z.B. "Kenner = 0").

Im Schritt 214 des Verfahrens 210 sendet die Master-Steuereinrichtung 110 den Ausführungsbefehl über die weitere Kommunikationsverbindung 144. Bei der vorliegenden direkten Kommunikationsverbindung 144 über den gesonderten Pin A kann die Kommunikationseinrichtung 116 dazu zum Beispiel einfach ein Anheben der Spannung am Pin A von 0 V auf zum Beispiel 5 V gegenüber der Signalmasse (Gnd) bewirken. Die Übermittelung des einfachen binären Ausführungsbefehls über die weitere Kommunikationsverbindung 144 kann auf diese Weise mit gegenüber der Kommunikationsverbindung 142 sehr geringer und zudem vorhersehbarer Latenz erfolgen.

Die Schweißgerät-Steuereinrichtung 130 empfängt im Schritt 234 des Verfahrens 230 den Ausführungsbefehl und bewirkt daraufhin im Schritt 236 des Verfahrens 230 die Ausführung der bereits im Schritt 232 vollständig empfangenen Steueranweisung. Auf diese Weise kann die Schweißgerät-Steuereinrichtung 130 die Steuerbefehle der Steueranweisung ohne weitere Latenzen ausführen und dadurch im vorliegenden Beispiel eine Stromflanke bewirken, wie sie in Fig. 3b dargestellt ist. Durch den Zeitpunkt der Übermittlung des Ausführungsbefehls kann zudem der Startzeitpunkt t₀ genau festgelegt werden, da die Latenz zur Übertragung des Ausführungsbefehls gering und vorhersehbar ist.

Auf diese Weise kann auch eine komplexe Steuerung der Schweißgeräte 120a-b durch die Master-Steuereinrichtung 110 in zuverlässiger und reproduzierbarer Weise erreicht werden.

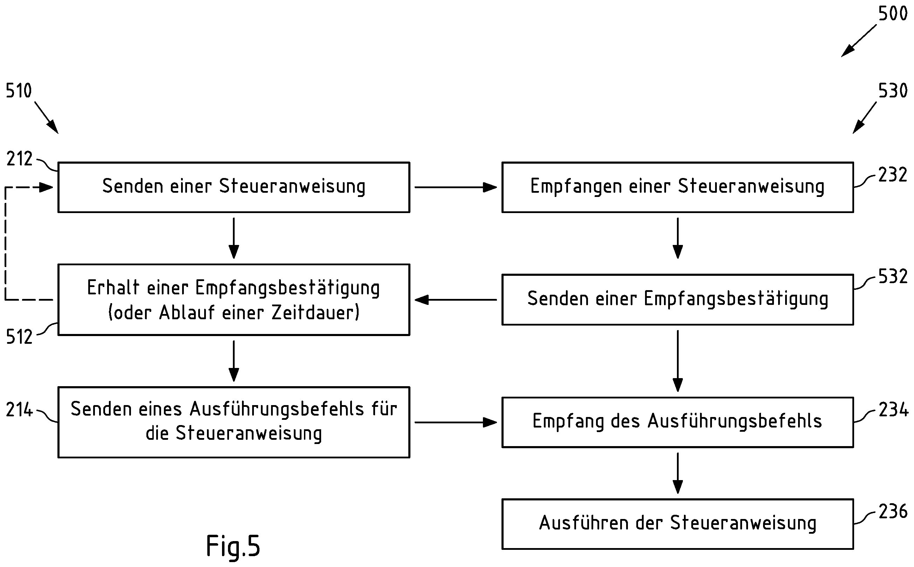

Fig. 5 zeigt ein weiteres Ausführungsbeispiel des Verfahrens zur übergeordneten Steuerung eines Schweißgeräts sowie des Verfahrens zur Steuerung eines Schweißgeräts. Das Verfahren 510 zur übergeordneten Steuerung kann insbesondere mit der Master-Steuereinrichtung 110 aus Fig. 1 durchgeführt werden. Das Verfahren 530 zur Steuerung eines Schweißgeräts kann insbesondere mit der Schweißgerät-Steuereinrichtung 130 des Schweißgeräts 120a oder 120b aus Fig. 1 durchgeführt werden. Gemeinsam stellen die Verfahren 510 und 530 ein Verfahren 500 zur Steuerung eines Schweißgeräts dar, das insbesondere mit dem System 100 aus Fig. 1 durchgeführt werden kann.

Das Verfahren 510 ähnelt dem Verfahren 210 aus Fig. 2 und das Verfahren 530 ähnelt dem Verfahren 230 aus Fig. 2. Einander entsprechende Schritte der jeweiligen Verfahren sind in Fig. 5 mit denselben Bezugszeichen versehen wie in Fig. 2 und es wird insoweit auf die Beschreibung zu Fig. 2 verwiesen.

Das Verfahren 530 unterscheidet sich dadurch vom Verfahren 230, dass die Schweißgerät-Steuereinrichtung 130 nach dem Empfang der Steueranweisung 300 in Schritt 232 in einem folgenden Schritt 532 eine Empfangsbestätigung über den Empfang der Steueranweisung 300 an die Master-Steuereinrichtung 110 sendet. Vorzugsweise führt die Schweißgerät-Steuereinrichtung 130 vor dem Versand der Empfangsbestätigung eine Prüfung durch, ob die Steueranweisung 300 vollständig und fehlerfrei empfangen wurde. Zu diesem Zweck kann die Steueranweisung 300 zum Beispiel einen Kontrollwert, beispielsweise eine Prüfsumme (wie in Fig. 3a dargestellt), enthalten, anhand derer die Schweißgerät-Steuereinrichtung 130 den vollständigen und fehlerfreien Empfang der Steueranweisung 300 prüfen kann.

Das Verfahren 510 unterscheidet sich entsprechend dadurch vom Verfahren 210, dass die Master-Steuereinrichtung 110 nach dem Senden der Steueranweisung 300 in Schritt 212 zunächst auf den Erhalt der Empfangsbestätigung in Schritt 512 wartet, bevor im Schritt 214 der Ausführungsbefehl an die Schweißgerät-Steuereinrichtung 130 gesandt wird.

Es kann vorgesehen sein, dass die Schweißgerät-Steuereinrichtung 130 im Schritt 532 mit der Empfangsbestätigung einen Empfangs-Kenner übermittelt, der anzeigt, ob die Steueranweisung vollständig und/oder fehlerfrei erhalten wurde oder nicht.

Die Master-Steuereinrichtung 110 kann dazu eingerichtet sein, die Steueranweisung 300 erneut zu senden, wenn die Empfangsbestätigung einen Empfangs-Kenner enthält, der anzeigt, dass die Steueranweisung nicht vollständig und/oder nicht fehlerfrei erhalten wurde (s. gestrichelter Pfeil von Schritt 512 nach Schritt 212), und/oder wenn die Empfangsbestätigung bis zum Ablauf einer vorgegebenen Zeitdauer seit dem Senden der Steueranweisung in Schritt 212 noch nicht empfangen wurde (in Schritt 512 in Klammern).

Durch das Verfahren gemäß Figur 5 wird erreicht, dass die Steueranweisung vollständig bzw. fehlerfrei von der Schweißgerät-Steuereinrichtung erhalten wurde, bevor der Ausführungsbefehl ergeht.

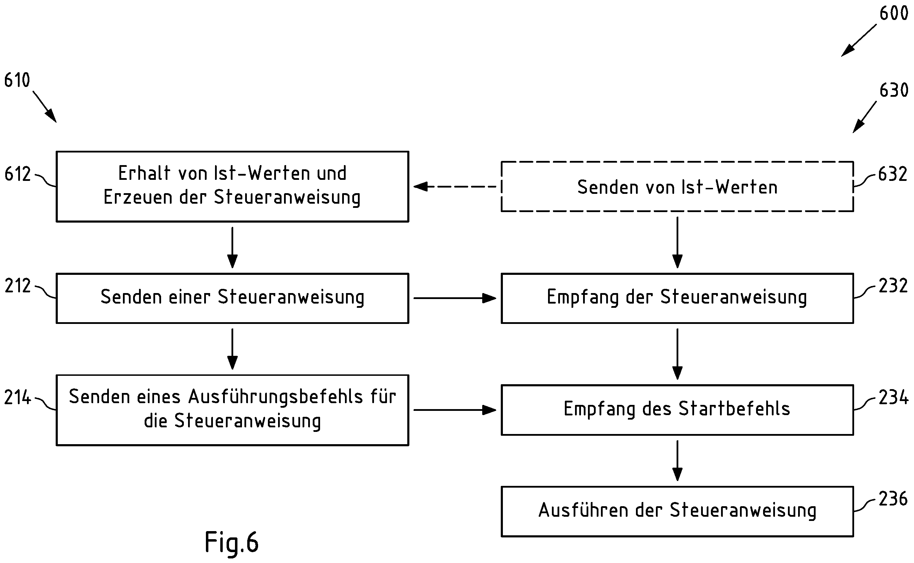

Fig. 6 zeigt ein weiteres Ausführungsbeispiel des Verfahrens zur übergeordneten Steuerung eines Schweißgeräts sowie des Verfahrens zur Steuerung eines Schweißgeräts. Das Verfahren 610 zur übergeordneten Steuerung kann insbesondere mit der Master-Steuereinrichtung 110 aus Fig. 1 durchgeführt werden. Das Verfahren 630 zur Steuerung eines Schweißgeräts kann insbesondere mit der Schweißgerät-Steuereinrichtung 130 des Schweißgeräts 120a oder 120b aus Fig. 1 durchgeführt werden. Gemeinsam stellen die Verfahren 610 und 630 ein Verfahren 600 zur Steuerung eines Schweißgeräts dar, das insbesondere mit dem System 100 aus Fig. 1 durchgeführt werden kann.

Das Verfahren 610 ähnelt dem Verfahren 210 aus Fig. 2 und das Verfahren 630 ähnelt dem Verfahren 230 aus Fig. 2. Einander entsprechende Schritte der jeweiligen Verfahren sind in Fig. 6 mit denselben Bezugszeichen versehen wie in Fig. 2 und es wird insoweit auf die Beschreibung zu Fig. 2 verwiesen.

Das Verfahren 610 unterscheidet sich dadurch vom Verfahren 210, dass vor dem Senden der Steueranweisung 300 in Schritt 212 zunächst in Schritt 612 Ist-Werte von Schweißparametern, beispielsweise des Schweißstroms oder der Schweißspannung, eines aktuellen Schweißprozesses erhalten werden und die Steueranweisung als Funktion der erhaltenen Ist-Werte erzeugt wird.

Die Master-Steuereinrichtung 110 kann die Ist-Werte beispielsweise von gesonderte Messsensoren, wie zum Beispiel dem an die Master-Steuereinrichtung 110 angeschlossenen externen Messsensor 119 erhalten. Der Messsensor 119 kann zu diesem Zweck beispielsweise so an einem der Schweißgeräte 120a-b (in Fig. 1 an Schweißgerät 120b) angebracht sein, dass der Messsensor 119 einen Schweißparameter, wie den Schweißstrom oder die Schweißspannung, messen kann.

Zusätzlich oder alternativ ist es auch denkbar, dass die Master-Steuereinrichtung 110 die Ist-Werte von den Schweißgeräten 120a-b selbst erhält, insbesondere von in den Schweißgeräten 120a-b integrierten Messsensoren. Zu diesem Zweck umfasst das Verfahren 630 vorzugsweise einen Schritt 632, in dem die Schweißgerät-Steuereinrichtung 130 das Senden von entsprechenden Ist-Werten an die Master-Steuereinrichtung 110 bewirkt.

Mit dem Verfahren in Fig. 6 kann über die Master-Steuereinrichtung 110 eine Regelung, insbesondere übergeordnete Regelung, von Parametern eines Schweißprozesses bewirkt werden. Zu diesem Zweck kann das Verfahren aus Fig. 6 insbesondere mehrfach, beispielsweise zyklisch, durchgeführt werden.

Mit den zuvor beschriebenen Verfahren kann eine effiziente Ausnutzung der Steuerressourcen der übergeordneten Steuerung erreicht werden. Insbesondere ist auf diese Weise durch die Übermittlung und anschließende gesonderte Auslösung der Steueranweisung eine kontinuierliche Signalvorgabe, insbesondere durch Sollwertvorgaben, möglich, anstatt dass einzelne Steuerbefehle mit punktuellen Sollwerten zu deren jeweiliger Ausführung einzeln übertragen werden müssen. Auf diese Weise lassen sich Lauf- und Jitterzeiten bei der Signalabbildung, beispielsweise bei der Umsetzung eines vorgegebenen Stromstärkensignals, reduzieren oder sogar eliminieren. Da die Steuerbefehle zu deren Ausführung nicht einzeln versandt werden müssen, kann auf diese Weise zudem die Auflösung im Sollwertsignal an der Schweißgerät-Steuereinrichtung erhöht werden, wodurch eine wesentliche Verbesserung in der Schweißprozessabbildung erreicht werden kann.

### Bezugszeichenliste:

- 100: System
- 110: Master-Steuereinrichtung
- 112: Steuereinheit
- 114: Speicher
- 116: Kommunikationseinrichtung
- 115, 117a-b, 118a-b: Schnittstelle
- 119: Messsensor
- 120a-b: Schweißgerät
- 121a-b: Schweißvorrichtung
- 122: Schweißstromquelle
- 123: Schweißbrenner
- 124: Elektrode
- 125: Roboterarm
- 126a-d: Antriebsachsen
- 130: Schweißgerät-Steuereinrichtung
- 132: Steuereinheit
- 134: Speicher
- 136: Kommunikationseinrichtung
- 137a-b, 138a-b: Schnittstelle
- 140a-b, 141a-b: Datenkabel
- 142: serielle Kommunikationsverbindung
- 144: weitere Kommunikationsverbindung
- 146: Steuerkabel
- 200, 500, 600: Verfahren zur übergeordneten Steuerung eines Schweißgeräts
- 210, 510, 610: Verfahren zur übergeordneten Steuerung eines Schweißgeräts
- 212, 214, 512, 612: Verfahrensschritt
- 230, 530, 630: Verfahren zur Steuerung eines Schweißgeräts
- 232, 234, 236, 532, 632: Verfahrensschritt
- 300: Steueranweisung

## Patentansprüche

1. Verfahren (210, 510, 610) zur übergeordneten Steuerung eines Schweißgeräts (120a-b), insbesondere ausgeführt mit einer Master-Steuereinrichtung (110) zur übergeordneten Steuerung ein oder mehrerer Schweißgeräte (120a-b),
- bei dem eine Steueranweisung (300) an eine Schweißgerät-Steuereinrichtung (130) eines Schweißgeräts (120a-b) gesendet wird, wobei die Steueranweisung (300) ein oder mehrere Steuerbefehle umfasst, die dazu vorgesehen sind, nach Erhalt eines Ausführungsbefehls ausgeführt zu werden, und
- bei dem, nach dem Senden der Steueranweisung (300), der Ausführungsbefehl an die Schweißgerät-Steuereinrichtung (130) des Schweißgeräts (120a-b) gesendet wird.

2. Verfahren nach Anspruch 1,
**dadurch gekennzeichnet, dass** Ist-Werte eines Schweißprozesses erhalten werden und die Steueranweisung (300) abhängig von den erhaltenen Ist-Werten erzeugt und/oder der Ausführungsbefehl abhängig von den erhaltenen Ist-Werten gesendet wird.

3. Verfahren nach Anspruch 1 oder 2,
**dadurch gekennzeichnet, dass**, nach dem Senden der Steueranweisung (300), eine Bestätigung über den Erhalt der Steueranweisung (300) empfangen wird und das Senden des Ausführungsbefehls abhängig vom Erhalt der Bestätigung erfolgt.

4. Verfahren (230, 530, 630) zur Steuerung eines Schweißgeräts (120a-b), insbesondere ausgeführt mit einer Schweißgerät-Steuereinrichtung (130) eines Schweißgeräts (120a-b),
- bei dem eine Steueranweisung (300) empfangen wird, wobei die Steueranweisung (300) ein oder mehrere Steuerbefehle umfasst, die dazu vorgesehen sind, nach Erhalt eines Ausführungsbefehls ausgeführt zu werden,
- bei dem, nach Empfang der Steueranweisung (300), der Ausführungsbefehl empfangen wird und
- bei dem, als Reaktion auf das Empfangen des Ausführungsbefehls, die Ausführung der Steueranweisung (300) bewirkt wird.

5. Verfahren nach Anspruch 4,
**dadurch gekennzeichnet, dass** ein oder mehrere erfasste Ist-Werte gesendet werden, insbesondere an die Master-Steuereinrichtung (110).

6. Verfahren nach Anspruch 4 oder 5,
**dadurch gekennzeichnet, dass**, nach Empfang der Steueranweisung (300), eine Bestätigung über den Erhalt der Steueranweisung (300) gesendet wird, insbesondere an die Master-Steuereinrichtung (110).

7. Verfahren nach einem der Ansprüche 1 bis 6,
**dadurch gekennzeichnet, dass** die Steueranweisung (300) ein oder mehrere Steuerbefehle zur zeitabhängigen Änderung mindestens eines Schweißparameters umfasst.

8. Verfahren nach einem der Ansprüche 1 bis 7,
**dadurch gekennzeichnet, dass** aus der Steueranweisung (300) ableitbar ist, insbesondere über einen von der Steueranweisung (300) umfassten Kenner, dass die ein oder mehreren Steuerbefehle der Steueranweisung (300) dazu vorgesehen sind, nach Erhalt eines Ausführungsbefehls ausgeführt zu werden.

9. Verfahren nach einem der Ansprüche 1 bis 8,
**dadurch gekennzeichnet, dass** die Steueranweisung (300) über eine erste Kommunikationsverbindung (142), insbesondere serielle Kommunikationsverbindung, gesendet oder empfangen wird und der Ausführungsbefehl über eine gesonderte weitere Kommunikationsverbindung (144) gesendet oder empfangen wird.

10. Verfahren (200, 500, 600) zur übergeordneten Steuerung eines Schweißgeräts (120a-b), ausgeführt mit einer Master-Steuereinrichtung (110) zur übergeordneten Steuerung ein oder mehrerer Schweißgeräte (120a-b) sowie einer Schweißgerät-Steuereinrichtung (130) eines Schweißgeräts (120a-b),
- bei dem die Master-Steuereinrichtung (110) eine Steueranweisung (300) an die Schweißgerät-Steuereinrichtung (130) sendet, wobei die Steueranweisung (300) ein oder mehrere Steuerbefehle umfasst, die dazu vorgesehen sind, nach Erhalt eines Ausführungsbefehls ausgeführt zu werden,
- bei dem die Schweißgerät-Steuereinrichtung (130) die Steueranweisung (300) empfängt,
- bei dem die Master-Steuereinrichtung (110), nach dem Senden der Steueranweisung (300), den Ausführungsbefehl an die Schweißgerät-Steuereinrichtung (130) sendet und
- bei dem die Schweißgerät-Steuereinrichtung (130) den Ausführungsbefehl empfängt und in Reaktion darauf die Ausführung der Steueranweisung (300) bewirkt.

11. Master-Steuereinrichtung (110) für die übergeordnete Steuerung eines oder mehrerer Schweißgeräte (120a-b), aufweisend jeweilige Mittel zur Durchführung eines Verfahrens (210, 510, 610) nach einem der Ansprüche 1 bis 3 und 7 bis 10.

12. Schweißgerät-Steuereinrichtung (130) eines Schweißgeräts (120a-b), aufweisend jeweilige Mittel zur Durchführung eines Verfahrens (230, 530, 630) nach einem der Ansprüche 4 bis 10.

13. System (100)
- mit einer Master-Steuereinrichtung (110) nach Anspruch 11 und
- mit ein oder mehreren Schweißgeräten (120a-b), wobei mindestens eines der ein oder mehreren Schweißgeräte (120a-b) eine Schweißgerät-Steuereinrichtung (130) nach Anspruch 12 aufweist.
